Europäisches Patentamt

**European Patent Office**

**Office européen des brevets**

(19)

(11) Publication number:

**0 121 322**

**A1**

(12)

# EUROPEAN PATENT APPLICATION

(21) Application number: **84301254.3**

(22) Date of filing: **27.02.84**

(51) Int. Cl.³: **F 16 L 27/04**

(30) Priority: **02.03.83 US 471290**

(43) Date of publication of application:
**10.10.84 Bulletin 84/41**

(84) Designated Contracting States:
**CH DE FR GB IT LI**

(71) Applicant: **AMSTED Industries Incorporated**
**3700 Prudential Plaza**
**Chicago, IL. 60601(US)**

(72) Inventor: **Peting, Robert G.**
**15208 Linden Drive**
**Oak Forest Illinois 60452(US)**

(74) Representative: **Carpmael, John William Maurice et al,**
**CARPMAELS & RANSFORD 43 Bloomsbury Square**
**London, WC1A 2RA(GB)**

(54) Snap ring, boltless pipe joint.

(57) A pipe joint for joining two ductile iron pipes (70, 96) is provided. A bell (74) is threaded onto a threaded end (76) of a first pipe. A sealing gasket (80) is located against the interior surface of the bell. A second pipe ball end is inserted into the bell, and a restraining ring (86) is placed between the bell interior surface and the ball end exterior spherical surface (94) of the second pipe. A snap ring (90) is expanded of its own spring action to abut between an interior flange end (88) of the bell and the restraining ring.

FIG. 3

EP 0 121 322 A1

SNAP RING, BOLTLESS PIPE JOINT

Background of the Invention

The present invention relates to a cast iron pipe joint, and more specifically, to a boltless pipe joint employing a restraining ring and a snap ring.

In joining cast iron pipe, it is desirable to produce a joint which is of high strength, good sealing quality, readily assembled in the field and capable of a reasonable degree of deflection from horizontal alignment. Prior art pipe joints include a type requiring a retainer ring to be bolted onto a cylindrical bell which was threaded onto an end of one pipe. A second pipe was then inserted into the bell and the retainer ring was then bolted onto the bell. Such operation was time consuming in the field, with usually ten bolts per joint having to be tightened. Further, the strength of such joints in opposition to the flow thrust or separating force between pipes was limited to the shear strength of the bolts and their respective nuts, not a desirable feature.

Another prior art type of pipe joint eliminated the need for a bolted connection. A bell was threaded into an end of a first pipe, and a second pipe was inserted into this bell. A bayonet type locking ring was then inserted into the bell and rotated to contact the respective flanges of the locking ring with the flanges of the bell. Such a joint is more readily assembled than a bolted type joint, but in the event of a rotation of the locking ring, the joint can separate.

Accordingly, it is an object of the present invention to provide a pipe joint that is readily assembled in the

0121322

field, is of high strength and has an improved locking mechanism.

Summary of the Invention

The present invention provides an improved cast iron pipe joint of a snap ring, boltless design that is of high strength, readily assembled in the field and has an improved locking mechanism and a method of assembling such joint.

In particular, the present invention provides a joint between two ends of two iron pipes comprising: a first elongated cylindrical pipe having an externally threaded end, a cylindrical bell sleeve threaded onto said threaded end of said first pipe, a first cylindrical notch in the interior surface of said bell sleeve, a sealing gasket within said notch, a ball end of a second pipe inserted into said bell sleeve contacting said sealing gasket, a restraining ring located between said bell sleeve and said ball end of said second pipe, and a snap ring expanded within a second cylindrical notch in the interior surface of said bell sleeve to hold said restraining ring and said ball end of said second pipe within said bell sleeve in sealing engagement with said first pipe.

Further, the present invention provides a method of joining two pipes comprising the steps providing a first pipe having a threaded end, threading a cylindrical bell onto said threaded pipe end, placing a gasket into a first notch in the interior surface of said cylindrical bell, inserting the ball end of a second pipe into said cylindrical bell, placing a circular restraining ring between the interior surface of said cylindrical bell and the ball end outer surface of said second pipe and expanding a snap ring within a second notch in said cylindrical bell to hold said

-2-

restraining ring and said ball end of said second pipe within said cylindrical bell.

In the pipe joint of the present invention, a threaded end of a first cast iron pipe is provided. A generally cylindrical bell is provided. This bell has an internally threaded smaller diameter end, and expands in a generally linear manner to a larger diameter unthreaded end. About midway between the ends of the bell, a circular notch is provided on the interior surface. Such notch is utilized to hold a sealing gasket or o-ring which usually is comprised of rubber or similar elastomer. A circular extension on the interior surface of the bell is spaced between the sealing gasket notch and a second circular notch or area of increased interior section diameter. Such second notch holds a generally cylindrical restraining ring. Such restraining ring has an inner inclined surface and an outer generally flat surface. A third circular notch or area of increased interior section diameter is adjacent the second notch and is separated from the large diameter end of the bell by an overhang or flange. Such third notch contains a snap ring which by its own spring action is expanded into the notch. Such snap ring abuts the restraining ring to hold it against the ball end of a second pipe. The inclined surface of the restraining ring abuts the spherical surface of the ball end of the second pipe, thusly maintaining the second pipe in a sealing relation with the first pipe by the contact of the ball end of the second pipe with the sealing gasket. Further, as the restraining ring inclined surface contacts the ball end of the second pipe between the point of greatest diameter of the ball end and the point where the second pipe expands to form the ball end, the expanding diameter of the ball end acts to abut the restraining ring and thusly prevent the pull out of the second pipe from the cylindrical bell.

-3-

Finally, the snap ring inserted into the third notch abutting the end flange of the bell and the restraining ring maintains the restraining ring and thus the second pipe in sealed engagement with the first pipe. Rotation of the snap ring will have no effect on the seal. Further, the entire cross section of the snap ring maintains the contact between the bell and flange and the restraining ring. The entire snap ring would have to shear to break the joint of the present invention.

Brief Description of the Drawings

In the drawings,

Figure 1 is a cross-section view of a prior art bolted pipe joint;

Figure 2 is a cross-section view of a prior art locking ring pipe joint;

Figure 3 is a cross-section view of the snap ring pipe joint of the present invention.

Detailed Description of the Preferred Embodiment

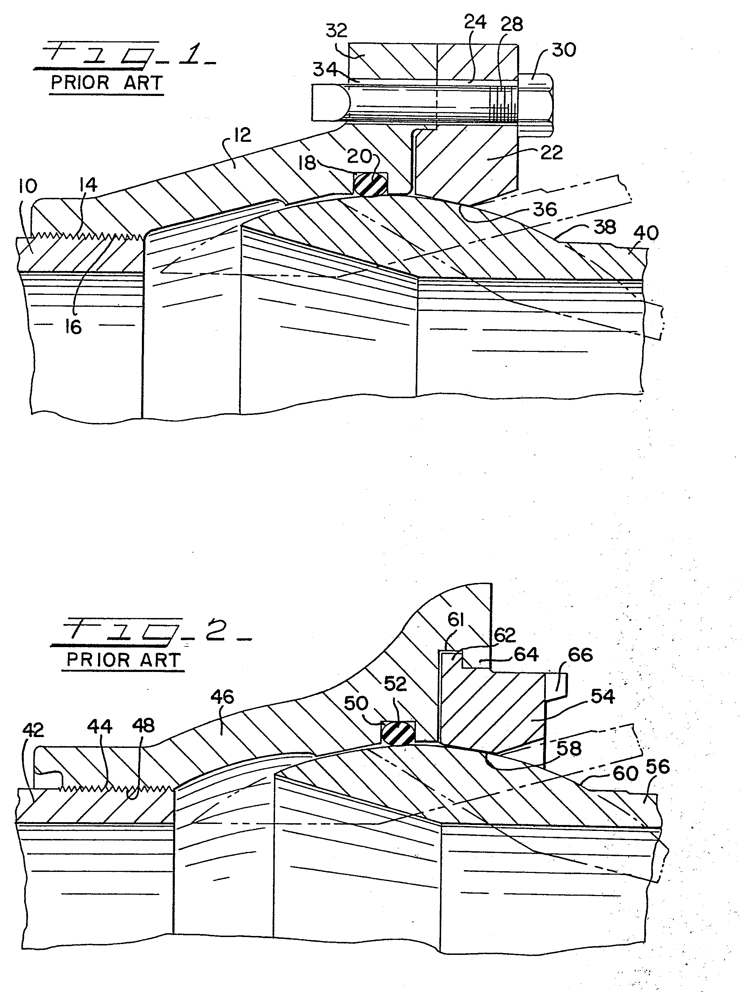

Referring to Figure 1, a prior art bolted pipe joint is shown. A first pipe 10, usually of cast iron, is partially shown and has an externally threaded end 14. A cylindrical bell 12 has an internally threaded end 16 threaded onto end 14 of pipe 10. Bell 12 has a circular internal surface notch 18 which contains a sealing ring 20. Expanding from the end of bell 12 near notch 18 is a receiver portion 32 having a bolt hole 34. A second pipe 40 is partially shown and has a ball end 38 with an outer spherical surface. A restraining ring 22 has an inner inclined surface 36 that abuts the surface of second pipe ball end 38 and has a bolt hole 24 in an upper expanded receiver portion. Restraining ring bolthole 24 aligns with bell bolthole 34 and a bolt 28 is threaded therethrough and is held by nut 30. Nine other similar bolts and boltholes are located around the bell- restraining ring joint.

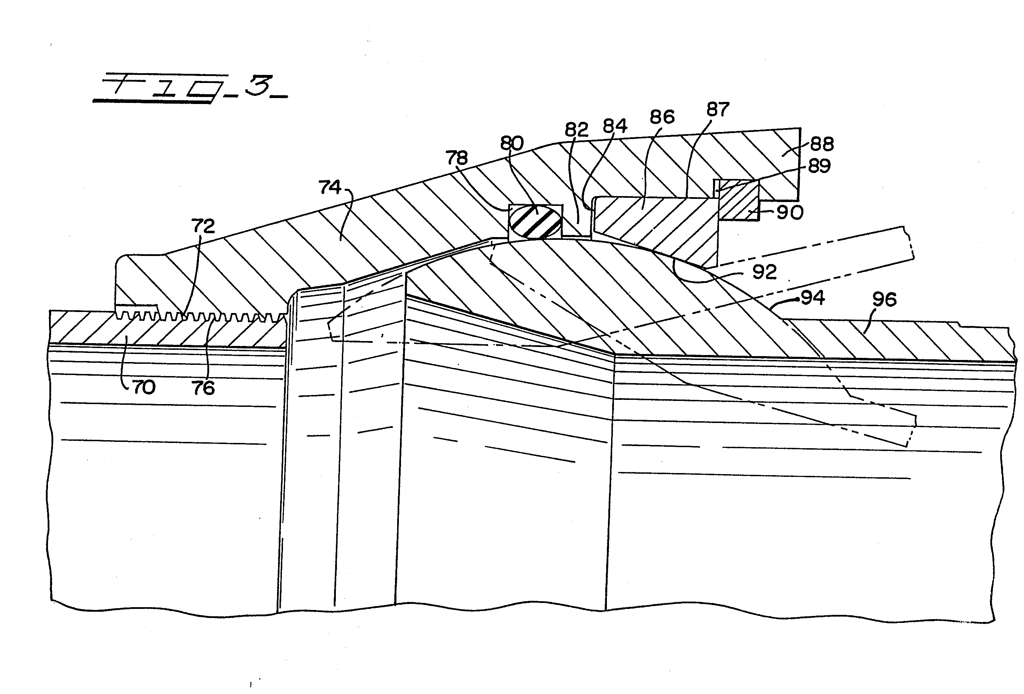

Referring now to Figure 2, a second prior art pipe joint is shown. A first pipe 42 is partially shown having external threading 44 at one end thereof. A cylindrical bell 46 has an internally threaded end 48 threaded onto end 44 of pipe 42. Bell 46 has a circular internal surface notch 50 which contains a sealing ring 52. A second circular internal surface notch 61 is located near the larger diameter end of bell 46 adjacent internal end flange 64. A second pipe 56 is partially shown having a ball end 60 with an outer spherical surface. A restraining ring 54 has an inner inclined surface 58 which abuts the surface of second pipe ball end 60. Further, the outer radial surface of restraining ring 54 includes several flanges 62 which are alternately placed around the exterior surface of ring 54. Further, ring 54 has two turning lugs 66 which aid in rotating ring 54. Ring flanges 62 form a bayonet type lock with corresponding flanges 64 located on the interior surface of the large diameter end of bell 46.

Referring now to Figure 3, a pipe joint in accordance with the present invention is shown. A first, usually cast iron, pipe 70 is provided, shown partially. Pipe 20 has an externally threaded end 72. A generally cylindrical bell 74 is provided, which expands in diameter from an internally threaded end 76 to a larger diameter flanged end 88. Threaded end 76 of bell 74 is threaded about threaded pipe end 72. About midway between the ends of bell 74, a rectangular notch 78 extends in a circular manner around the interior surface of bell 74. A sealing ring 80 is located within notch 78. A generally rectangularly shaped extension 82 extends in a circular manner around the interior surface of bell 74, forming a partition between notch 78 and a second notch or area of increased interior diameter 84. A generally cylindrical restraining ring 86 is located in area 84.

Restraining ring 86 has a generally flat upper or exterior surface 87 and an inclined lower or interior surface 92. A second pipe 96 is shown partially and has a ball end with a spherical exterior surface 94. Inclined surface 92 of restraining ring 86 abuts ball end surface 94.

A third notch 89 or area of increased interior diameter is adjacent second notch 84 on the interior surface of bell 74, and is adjacent itself to interior end flange 88 of bell 74. A snap ring 90 is located within third notch 89, and abuts end flange 88 and restraining ring 86. By its own spring action, snap ring 90 is expanded into notch 89. As inclined surface 92 of restraining ring 86 abuts spherical surface 94 of the ball end of second pipe 96, second pipe 96 is maintained in sealing engagement with first pipe 70 due to the ball end spherical surface abutting sealing gasket 80.

Second pipe 96 can rotate approximately 15° from horizontal axial alignment with first pipe 20.

In assembling the pipe joint of the present invention, bell 74 is threaded onto first pipe threaded end 72. Sealing gasket 80 is placed in the notch 78 in bell 74. Ball end 94 of second pipe 96 is inserted into bell 74. Restraining ring 86 is inserted into bell 74. Snap ring 90 is then released by cutting a soft wire passed through holes in the ends of the ring (not shown) to expand into notch 89 and thusly hold restraining ring 86 in abutting contact with second pipe ball end surface 94. This abutting relationship holds second pipe 96 in sealing relation with first pipe 20 as the ball end surface 94 of second pipe 96 abuts sealing ring or gasket 80

CLAIMS

1.  A joint between two ends of two iron pipes comprising:

a first elongated cylindrical pipe having an externally threaded end, a cylindrical bell sleeve threaded onto said threaded end of said first pipe, a first cylindrical notch in the interior surface of said bell sleeve,

a sealing gasket within said notch,

a ball end of a second pipe inserted into said bell sleeve contacting said sealing gasket,

a restraining ring located between said bell sleeve and said ball end of said second pipe,

and a snap ring expanded within a second cylindrical notch in the interior surface of said bell sleeve to hold said restraining ring and said ball end of said second pipe within said bell sleeve in sealing engagement with said first pipe.

2.  An arrangement joining two ends of two separate pipes comprising a first pipe having a threaded end,

a cylindrical bell threaded onto said first pipe,

a circular sealing gasket located in a first notch in said bell,

a ball end of a second pipe inserted into said cylindrical bell,

a restraining ring engaging said ball end of said second pipe and engaging an interior surface of said cylindrical bell,

and a snap ring engaging said restraining ring and said cylindrical bell to hold said second pipe within said bell in sealing engagement with said first pipe.

3.  The pipe joint arrangement of claim 2 wherein the ball end of the second pipe has an outer spherical surface, and the restraining ring has an inner inclined surface which engages the outer spherical surface of the ball end of the second pipe.

4.    The pipe joint arrangement of claim 2, wherein the snap ring expands by its own spring action into a second notch in said cylindrical bell.

5.    The pipe joint arrangement of claim 2, wherein the second pipe can deflect a maximum of 15° from horizontal alignment with the first pipe.

6.    A method of joining two pipes comprising the steps of

providing a first pipe having a threaded end,

threading a cylindrical bell onto said threaded pipes end,

placing a gasket into a first notch in the interior surface of said cylindrical bell,

inserting the ball end of a second pipe into said cylindrical bell,

placing a circular restraining ring between the interior surface of said cylindrical bell and the ball end outer surface of said second pipe,

and expanding a snap ring within a second notch in said cylindrical bell to hold said restraining ring and said ball end of said second pipe within said cylindrical bell.

0121322

1/2

Fig_1_
PRIOR ART

Fig_2_
PRIOR ART

0121322

_FIG. 3_

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-2 181 117 (BANIDES ET DEBEAURAIN) <br> * Figure 1 * | 1-3 | F 16 L 27/04 |
| A | US-A-3 515 414 (KOWALEWSKI) <br><br> * Column 2, line 64 - column 3, line 20; figures 1, 2 * | 1,2,4-6 | |
| A | FR-A-2 468 825 (POLVA-NEDERLAND) <br> * Figures 1, 11 * | | |
| A | US-A-4 088 348 (SHEMTOV) <br> * Figures 2, 3, references 13, 20, 24 * | 1 | |
| A | DE-A-2 918 589 (SCHEEPSWERF STAPEL) | | **TECHNICAL FIELDS SEARCHED (Int. Cl. ³)** <br><br> F 16 L 27/00 |
| A | BE-A- 868 895 (SLIEDRECHTSCHE MACHINEFABRIEK) | | |

The present search report has been drawn up for all claims

| Place of search | Date of completion of the search | Examiner |
|---|---|---|
| BERLIN | 21-05-1984 | SCHLABBACH M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82